# EUROPEAN PATENT SPECIFICATION

(11) **EP 0 402 291 B1**
(45) Date of publication and mention of the grant of the patent: **31.01.1996**
(21) Application number: 90440052.0
(22) Date of filing: 07.06.1990
(51) Int. Cl.: C09J 11/00, C09J 9/00

(54) **Pressure-sensitive adhesive composition**
Druckempfindliche Klebstoff-Zusammensetzung
Composition d'adhésif sensible à la pression

(30) Priority: 09.06.1989 US 364006
(43) Date of publication of application: 12.12.1990
(73) Proprietor: H & N CHEMICAL COMPANY, Totowa, New Jersey (US)
(72) Inventor: Levine, Eli, Union New Jersey (US); Wolfson, Herbert L., Baldwin, New Jersey (US); Silverberg, Alvin H., East Brunswick New Jersey (US)
(74) Representative: Mayran, Ninon, Avocat

(56) References cited:
- EP-A- 0 122 457
- DE-A- 2 411 169
- DERWENT ACCESSION, no. 88-320 210, Questel Telesystems (WPIL) DERWENT PUBLICATIONS LTD., London

## Description

The present invention relates to adhesive formulations for coating onto substrates of pressure-sensitive adhesive products, to pressure-sensitive adhesive products made from such formulations, and more particularly to storage-stable high solids adhesive formulations which may be used to prepare pressure-sensitive products exhibiting a balance of good tack, and peel and sheer resistance. The invention further relates to novel methods for preparing adhesive formulations and to adhesive formulations and products which perform well at high temperatures.

Pressure sensitive adhesives are sold in solution form for application to desired substrates For environmental and economic reasons, it is desirable that the solution-based acrylic adhesive be made and applied at a solids level as high as is practicable. However, a proper balance of adhesive properties has proven difficult to achieve at a very high solids level. Storage stability, particularly in the presence of reactive crosslinkers, has also proven difficult at such levels.

The prior art has attempted to solve these problems in a number of ways, but without entirely satisfactory results. For example, many high solids adhesives based upon acrylic latices have rheological deficiencies and frequently lack a proper balance of tack and peel and sheer resistance.

Higher solids solvent-based acrylic pressure sensitive adhesives, nominally 58% solids (by weight) and higher, have viscosities so high as to make application difficult. When lower viscosities are obtained through the use of chain-terminating agents such as lower alcohols, mercaptans and the like, it becomes difficult to obtain a desirable balance of physical properties in the final adhesive product. It is believed that the average molecular weight of chain-terminated resins made in this way are below the molecular weight ranges usually needed for optimal physical properties.

The use of chain transfer agents during polymerization reactions involved in the production of certain adhesive formulations (or precursors thereto) is known, for example, from U.S. Patents 4,316,830, 4,140,668, 4,128,518, 3,923,752 and 3,920,600. Use of such agents to control molecular weight is disclosed in U.S. Patents 4,810,523, 4,702,496, 4,608,111, 4,322,472 and 4,230,772.

U.S. Patent 4,305,996 relates to adhesives made from hydroxyl-containing liquid polymers. A Mercaptan compound is used as a chain transfer agent during preparation of polymers.

U.S. Patent 4,042,554 relates to preparation of mastic adhesives, noting that a larger amount of chain transfer agent is needed for a sol latex relative to a gel latex.

U.S. Patents 4,005,247 and 3,769,254 relates to preparation of pressure sensitive adhesives by reacting certain acrylic interpolymers with certain metal alkoxides.

U.S. Patent 33,532,708 relates to room temperature cross-linkable pressure sensitive adhesives prepared in an organic solvent and a metal alkoxide.

U.S. Patents 3,707,518 and 3,617,362 relate to self cross-linking pressure sensitive adhesives comprising alkoxy silyl cross-linking monomers.

It is accordingly an object of the present invention to provide a solvent-based adhesive formulation having high solids content together with coatable viscosity and superior physical properties in use, such as shear strength, peel resistance, tackiness and the like.

It is another object of the invention to provide cost-efficient low solvent adhesive formulations which are easy to transport and cure without raising the degree of environmental protection concerns which accompany higher solvent formulations.

It is another object of the invention to provide adhesive products which are storage-stable and which maintain coatable viscosity over time.

It is another object of the invention to provide adhesives capable of demonstrating heatresistance, and of providing good shear strength even at high temperatures.

It is another object of the invention to provide novel methods of manufacturing adhesive formulations wherein undesirable premature cross-linking of polymer is repressed during manufacture and storage.

These and other objects are accomplished by providing a pressure-sensitive composition comprising an interpolymer in solution, said interpolymer having been formed by a polymerization reaction, in the presence of about 7 % to 20 % by weight of a chain transfer agent, between at least two monomers, one of which is an alkylacrylate and another of which is an internal cross-linking monomer.

The present invention further provides a pressure-sensitive adhesive composition which is particularly suited for high-temperature applications comprising an interpolymer in solution, said interpolymer being comprised of about 0.01 % to 5.00 % by weight of an internal cross-linking monomer, said composition having a Dry Williams Plasticity Number of about 0.25 to about 1.8.

The invention further provides a pressure-sensitive adhesive composition which may be formulated at high solids content, exceeding 58 % by weight, and which is useful in high temperature applications, said composition comprising an interpolymer in solution with an external cross-linking agent which is capable of cross-linking said interpolymer, said interpolymer further having reactive hydrogen atoms and having been formed in the presence of about 0.5 to 15 % of at least one acidic monomer, said composition having a Dry Williams Plasticity Number of about 1.7 to about 4.0.

The present invention further provides a process for the manufacture of novel pressure-sensitive adhesive compositions, said process comprising :
(a) preparing an interpolymer-containing formulation having a dry Williams plasticity number between about 0.25 and about 1.8 by initiating a polymerization reaction, in the presence of solvent and of 7 % to 20 % (by weight of total monomer charge) of a chain transfer agent, between at least two monomers, one of which is an alkylacrylate and another of which is an internal cross-linking monomer, said internal cross-linking monomer being present in an amount of 0.01 to 5.00 % by weight of the total monomer charge ;
(b) adding optionally to said formulation a sufficient quantity of an external cross-linking agent to adjust the Williams Plasticity Number of said formulation to between about 1.7 and about 4.0.

Adhesive formulations in accordance with the invention may be coated and dried in a conventional heat-drying process, and exhibit, after curing, exceptional shear strength, tackiness and other desirable adhesive qualities, including good heat resistance.

As used herein the term "interpolymer" includes any polymeric chain comprised of two or more monomers wherein the polymeric chain is capable of cross-linking with itself through an external cross-linking agent activated by solvent removal.

As used herein, an "internal cross-linking monomer" includes any monomer which is incorporated within an interpolymer and which includes functional side chains capable of establishing covalent bonds to an interpolymer chain other than the one in which it is incorporated. Such internal cross-linking monomers include but are not limited to alkoxides of a central atom which is further substituted by a polymerizable methacrylyl function.

As used herein, an "external cross-linking agent" includes any agent which is not part of an interpolymer chain, but which is capable of cross-linking two or more interpolymer chain through the acid functions of such chain.

Except where otherwise specified, "Williams Plasticity" or "Williams Plasticity Number", as used herein, is the value obtained by testing the solids of the formulations of the invention in accordance with standard testing procedures set forth at ASTM standard D-926-83, after preparing the solids to be tested as follows. A film of solvent-containing formulations (sufficient to dry to about 2 millemeters thickness is cast onto release paper, air dried for five minutes, then exposed to heat at 212°F for five minutes. The resulting film is formed into a substantially spherical ball having a mass of about 2 grams. The ball is conditioned at 100°F for 15 minutes, together with the plastometer (Scott Model P4) which has also been conditioned at 100°F. The ball is placed between plates of the plastometer and measurements taken by standard techniques (see ASTM D-926-83).

When hydroxylic chain transfer agents are used to inhibit chain growth during preparation of the interpolymer of the invention they are additionally believed to unexpectedly repress undesirable premature cross-linking, especially by any internal cross-linking monomers which are part of the growing interpolymer chain. Such cross-linking is desirably avoided during manufacture and storage of the adhesive formulations of the invention, and desirably occurs only during heat curing of the formulation after it has been coated on a suitable substrate during preparation of an adhesive product such as an adhesive tape. It is at this later stage, after viscosity has ceased to be a concern, that desirable cross-linking occurs. It is believed that adhesive properties of the final product are substantially enhanced by this cross-linking.

In one embodiment of the invention, there is provided a pressure-sensitive adhesive composition comprising up to about 42% by weight of an organic solvent and at least 58% by weight of solids which when dry, exhibit a Williams Plasticity number from about 1.7-4.0. The solids include an external cross-linking agent activated by removal of solvent.

Prior to addition of external cross-linking agents, Dry Williams Plasticity for the interpolymer backbone may vary from about 0.25 to about 1.8. Values of 0.5 to 1.2 are preferred.

Applicant has surprisingly found that adhesives prepared in accordance with the present invention, when dry, display markedly improved adhesive properties, particularly shear resistance. When internal cross-linking monomers such as alkoxy silanes are incorporated into the interpolymer chain, shear resistance is unexpectedly high for high temperature applications. The adhesive formulations may further include organic solvents and cross-linking agents activated by solvent removal under ambient conditions. High solids content, for example in excess of 58% by weight, and preferably in excess of 60% by weight are obtainable while maintaining good adhesive characteristics. Even at these high solids contents, the polymer/solvent formulations retain a viscosity suitable for coating.

In order to manufacture the novel adhesive formulations of the invention, the interpolymer is preferably formed as follows. Desirably, a substantial portion of the monomers used are alkyl acrylates. In preferred embodiments, the alkyl groups have from about 1 to 10 carbon atoms. Preferred alkyl acrylate monomers include but are not limited to ethyl acrylates, isopropyl acrylates, butyl acrylates, isobutyl acrylate, and methyl or ethyl alkyl acrylates such as 2-ethylhexyl acrylate. Monomers which are not esters of acrylic acid, and which are monofunctional, may also be used. Examples of such monomers include, but are not limited to vinyl acetate, vinyl propionate, styrene, a maleic acid diesters, fumaric acid diesters, ethylene and vinyl chloride.

Acidic monomers are also included to provide reactive hydrogen atoms and sites for subsequent cross-linking. Preferred monomers for imparting this functionality include but are not limited to acrylic acid, methacrylic acid, maleic anhydride, fumaric acid, maleic acid half-esters, itaconic acid and crotonic acid. Carboxylic monomer levels less than 15%, on weight of monomers, is preferred, and levels above 3%, especially from about 5.2%-7%, are most desirable, although levels as low as 0.5% are possible when there is a high frequency of internal cross-linking monomers.

Hydroxylic monomers are also useful in the present invention. Examples of such monomers include, but are not limited to hydroxyethyl acrylate, hydroxypropyl acrylate, hydroxyethyl methacrylate and hydroxypropyl methacrylate.

The monomers are preferably dissolved in a mixture of organic solvents suitable as a polymerization medium. Useful solvents include but are not limited to toluene, xylene, ethyl acetate, n-propyl acetate, isopropanol, acetone, methyl acetate, hexane and heptane. The amount of solvent blend used for the initial charge varies across a wide range, but preferred solvent contents, prior to initiation, range from about 10% to about 65%, on total weight of materials charged to the reactor. It should be noted that the lower alcohols are effective chain transfer agents and this aspect of their performance characteristics is important in determining their level of use as described in more detail below regarding chain transfer agents.

An internal cross-linking monomer is preferably added and may be charged to the reactor initially, or added to the reaction mass over an extended period. The level of internal cross-linking monomer used may range from 0.01 to 5.00%, on weight of the total monomer charge, but preferably is 0.10 to 1.00%. Preferred internal cross-linking monomers are alkoxides of a central atom which is further substituted with a polymerizable methacrylyl function. The central atom is preferably selected from Groups II, III or IV of the periodic table, and/or is a metal. Suitable internal cross-linking monomers include, but are not limited to, methacryloxyalkyl silanes having at least one alkoxy group such as a methoxy or ethoxy group. Preferred silanes include but are not limited to a 3-methacryloxypropyltrimethoxy silane and gamma-methacryloxypropyl-tris-(beta-methoxyethoxy) silane.

Hydroxylic chain-transfer agents are present during preparation of the interpolymer of the invention to prevent gellation during processing, to increase shelf life of the adhesive formulation, and, of course, to control the molecular weight of the growing interpolymer. As indicated above, the lower alcohols (methanol, ethanol, isopropanol, n-propanol) are effective chain transfer agents. Other compounds which may be used include but are not limited to acetoacetic ester and acetyl acetone. The amount of chain transfer agent present during preparation of the interpolymer should exceed 7% by weight of polymerizable materials, preferably from 10-20% and more preferably from 14-18%. When isopropyl alcohol is the only chain transfer agent used, the ratio of transfer agent to silane momoner is preferably from about 40:1 to about 100:1 (weight basis), (e.g. about 80:1). If small quantities of acetyl acetone are added to the isopropyl alcohol, stability is imparted by a somewhat lower ratio of transfer agents to silane monomer. Williams Plasticity of the interpolymer alone (e.g. without external cross-linking agents) is preferably maintained between about 0.25 and 1.80, desirably about 0.5 to 1.2. Interpolymer, chain growth preferably proceeds in the presence of at least about 0.71% (by weight of polymerizable material) of the chain transfer agent.

The initial charge is heated to reflux. Reflux temperature varies with solvents and monomers selected and is preferably 70°C to about 100°C. Then, internal cross-linking monomer is preferably added substantially simultaneously with addition of an initial catalyst solution. The initial catalyst may be any species capable of initiating copolymerization of the monomers initially charged and include but are not limited to t-butylperoxy-2-ethyl hexanoate, t-butylperoxy-pivalate, t-amylperoxy-2-ethyl hexanoate, benzoyl peroxide and such other initiators as have half-lives of about 0.5 to 2.0 hours at 70°C to 100°C. Preferably, both the initial catalyst and silane are dissolved in an ester solvent such as ethyl acetate before being charged into the reaction vessel.

Between about 30 minutes and 2 hours after initiation, additional internal cross-linking monomers may be added, preferably just prior to the start of an extended addition of a second monomer solution. The time period of the extended addition of second monomer solution preferably varies between 2 to 5 hours.

After completion of the delayed additons, reflux is preferably maintained for several hours such that the total time for the entire polymerization reaction described above is at least about 5 hours and preferably in excess of 8 hours.

The delayed catalyst solution preferably includes a sufficiently high concentration of solvents with enhanced chain transfer properties to ensure stability during processing. An insufficiency of chain transfer agents can result in gellation during processing. A transfer agent to internal cross-linking monomer ratio of about 80:1 by weight is preferred when the chain transfer agent is isopropyl alcohol.

After reflux is terminated, the reaction mix is allowed to cool. Following cooling, cross-linking agent is optionally added together with additional solvents to maintain coatable viscosity. An external cross-linking agent capable of being activated by solvent removal is added in an amount sufficient to impart a Williams Plasticity between about 1.7 and 4.0 depending upon final use. Raising Williams Plasticity is believed to somewhat favor shear resistance, while a lower plasticity is believed to favor peel resistance. Preferred external cross-linking agents include metal alkoxides which may have alkyl or other substituents on the central metal atom in addition to the alkoxide substituents. Preferred metals of the central atom include but are not limited to aluminum, nickel and calcium. Resinous cross linkers such as urea resins and/or melamine resins are also useful. Examples of external cross-linking agents useful in accordance with the invention are magnesium isopropoxide, titanium isopropoxide, ferric isopropoxide, diisopropoxy titanium acetylacetone and chelated aluminum esters in which the chelating agent is acetylacetone.

The total solids content is then preferably adjusted to a non-volatile content of at least 58% by weight. Adhesives formulated in accordance with the invention exhibit lower viscosity then prior-art components at non-volatile contents in excess of 58%, while maintaining good shear and peel tack, etc. Viscosities well under 4500 centipoise are achievable at 60% solids content. As set forth in more detail in the examples below, tests have been conducted by which formulations of the invention are coated onto substrates and heat dried conventionally to produce adhesives products exhibiting excellent peel resistance and good resistance to shear at both room temperature and elevated temperatures.

### EXAMPLE 1

An initial charge is prepared by thoroughly intermixing in a reaction vessel the following components in the amounts shown:

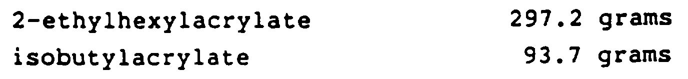

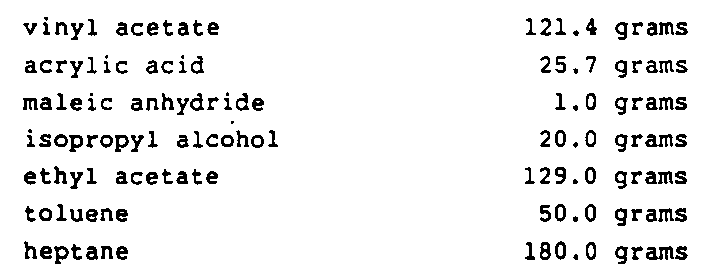

Separately an initial catalyst solution was prepared containing 0.75 grams of t-butyl peroxy-2-ethyl hexanoate, 0.75 grams of odorless mineral spirits, 10 grams of ethyl acetate and a silane cross-linking monomer solution was prepared containing 4.5 grams of 3-methylacryloxypropyltrimethoxy-silane in 10.0 grams of ethyl acetate. The initial charge was heated to reflux, after which the initial catalyst solution and 7 grams of the silane monomer solution were added. Approximately 45 minutes after this initiation, the balance of the silane monomer solution was added followed immediately by a gradual feeding of delayed monomers and delayed catalyst over a period of 4 hours.

The delayed monomers were as follows:

| | |
|---|---|
| 2-ethylhexylacrylate | 491.0 grams |
| isobutylacrylate | 151.0 grams |
| vinyl acetate | 88.2 grams |
| acrylic acid | 41.8 grams |
| isopropyl alcohol | 80.0 grams |

The delayed catalyst solution was formulated as follows:

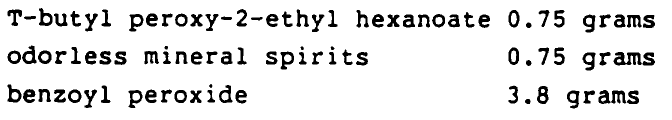

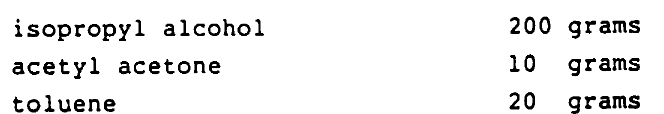

Reflux was maintained for 3 hours after all of the delayed monomers and delayed catalyst were charged. The reaction mixture upon cooling had a viscosity of 3350 cps, a Williams Plasticity Number of 0.55 and solids content of 61.36%. Sufficient aluminum acetylacetonate in toluene solution, was added to increase the Williams Plasticity to 2.55. A fourth of a percent, on total weight, of acetyl acetone was added to ensure additional stability. The viscosity of the compounded adhesive was observed to be 3200 centipoise at 60% solids.

### EXAMPLE 2

A film of the adhesive solution of Example 1, 2 mils dry thickness, was applied to a polyester substrate. The solvents were heat evaporated, leaving a dried, cross-linked adhesive tape product. A strip of this product was cut and placed onto a standard stainless steel plate such that it overlapped the plate by an area of one square inch. A roller was used to press the adhesive-coated strip against the standard plate. After 15 minutes a weight of 4 lbs. was placed on the strip. The strip resisted shear failure for a period of 116.2 hours at room temperature.

### EXAMPLE 3

The formulation of Example 1 was tested in accordance with the technique of Example 2, with the exception that a one pound weight was used instead of a four pound weight, and shear was tested at an elevated temperature of 300°F. Shear resistance was still being maintained after 100 hours at which time the test was discontinued.

### EXAMPLE 4

The adhesive formulation produced in Example 1 was coated (in an amount sufficient to leave one millimeter of solids upon solvent evaporation) onto a polyester substrate 1 inch wide and approximately 10 inches in length, and heat dried. A five inch portion of the specimen was applied, adhesive side down, to the longitudinal surface of a stainless steel test panel. After 15 minutes of dwell time, a free end of the tape was doubled back at an angle of 180° and one inch of the tape was peeled from the panel at the folded end. The free portion of the panel was clamped into the upper jaw of the tester with the tab area of the tape clamped in the lower jaw. Testing was commenced at a uniform jaw separation rate of 12 inches per minute. The first half inch of the test was disregarded. The average scale value obtained for 2 inches of mechanical peel was observed to be 3.6 lbs. in one test, and 3.8 lbs. in a second test of the same adhesive.

### EXAMPLE 5

The adhesive formulation produced in Example 1 was coated onto a polyester substrate and heat-dried. The sample was then tested with a Polyken Probe Tack Tester, Model 480-2, Series 400. A six-inch strip (adhesive side up) was placed on the bench of the tester. A 20 gram annular weight (100 g/cm) was placed on the adhesive. The combination of annular weight and tape was placed in the carrier well of the Tack Tester. When the test button of the previously zeroed tack tester was depressed, a tack value of 493 g/cm was obtained from the digital readout.

### EXAMPLE 6

A mixture of monomers was prepared as follows:

| | |
|---|---|
| 2-ethylhexylacrylate | 263.2 |
| n-butyl acrylate | 141.0 |
| isobutylacrylate | 100.0 |
| acrylic acid | 25.3 |
| maleic anhydride | 1.0 |

The monomer mixture was divided into 2 portions A & B.
A consisted of 200 gm of mixture.
B consisted of 330.5 gm of mixture.

A was charged to the reactor, followed immediately by the following mixture of solvents:

| | |
|---|---|
| ethyl acetate | 200 |
| heptane | 125 |
| acetone | 25 |
| toluene | 25 |

Reactor and contents were heated to 75°C and 1/2 of the initial catalyst solution was added.

| Initial Catalyst Solution | |
|---|---|
| 2,2-azobis (2-methyl propanenitrile) | 1.4 |
| ethyl acetate | 20 |

The batch was heated further until solvent reflux was observed. Shortly thereafter, initiation ensued. This point was marked by large increase of reflux.

When the reflux rate had subsided substantially, B was added to the reactor, concurrent with the remainder of the initial catalyst solution. Both additions were made over a period of 15 minutes. Following these additions, the batch was heated at reflux for 45 minutes. At this point, the following two extended additions were started. They were carried out over a period of 4 hours.

| Extended Monomer Addition | |
|---|---|
| 2-ethylhexyl acrylate | 384.8 |
| butyl acrylate | 361.2 |
| acrylic acid | 35 |
| isopropyl alcohol | 40 |

| Extended Catalyst Solution | |
|---|---|
| 2.2-azobis (2-methylpropane nitrile | 2.6 |
| benzoyl peroxide | 2.0 |
| isopropyl alcohol | 90 |
| acetylacetone | 30 |
| ethyl acetate | 80 |

Following the completion of these additions, the batch was maintained at reflux for 3 hours. Batch was then cooled down and diluted with 50 grams of isopropyl alcohol to a total weight of 2112.5 grams.

The base resin was utilized to prepare a compounded adhesive, by adding 20 gm of 10% aluminum acetylacetonate in toluene to 255 gm of the base resin. The solids content of the resulting adhesive compound was 61.94%, Williams Plasticity Number was 2.76 and the viscosity was 4400 cps at room temperature.

The terms and descriptions used herein are preferred embodiments set forth by way of illustration only, and are not intended as limitations on the many variations which those skilled in the art will recognize to be possible when practicing the present invention as defined by the following claims.

## Claims

1. A pressure-sensitive adhesive composition comprising an interpolymer in solution, said interpolymer having been formed by polymerization, in the presence of from 7 % to 20 % by weight of a chain transfer agent, of at least two monomers one of which is an alkylacrylate and another of which is an internal cross-linking monomer, said internal cross-linking monomer being present in an amount of from 0.01 to 5.00 % by weight of the interpolymer ; wherein the dry Williams placticity number of said interpolymer is between 0,25 and 1,8.

2. The pressure-sensitive adhesive composition of claim 1, wherein said internal cross-linking monomer is an alkoxide of a central atom which is further substituted with a polymerizable methacrylyl function.

3. The pressure-sensitive adhesive composition of claim 2, wherein said internal cross-linking monomer is an alkoxy silane with a polymerizable methacrylyl function.

4. The pressure-sensitive adhesive composition of claim 3 wherein said internal cross-linking monomer is selected from the group consisting of gamma-methacryloxypropyltrimethoxy silane, gamma-methacryloxypropyl-tris-(beta-methoxyethoxy) silane, and mixtures of the foregoing.

5. The pressure-sensitive adhesive composition of claim 1, wherein said chain transfer agent is selected from the group consisting of lower alkyl alcohols, acetoacetic ester,acetyl acetone and mixtures of foregoing.

6. The pressure-sensitive adhesive composition of claim 1, wherein said interpolymer further comprises from 0,5 to 15 % (by weight of the interpolymer) of at least one acidic monomer.

7. The pressure-sensitive adhesive composition of claim 6, further comprising an external cross-linking agent in an amount sufficient to impart a dry Williams plasticity number between about 1.7 and about 4.0.

8. The pressure-sensitive adhesive composition of claim 7, wherein said external cross-linking agent is selected from the group consisting of urea resins, melamine resins and metal alkoxides which may have alkyl or other substituent on the metal atom in addition to the alkoxide substituent.

9. The pressure-sensitive adhesive composition of claim 7 wherein said interpolymer comprises from about 0,1 % to about 1.0 % (by weight of the interpolymer) of said internal cross-linking monomer.

10. The pressure-sensitive adhesive composition of claim 7 wherein said interpolymer includes at least 3 % (by weight of the interpolymer) of an acidic monomer.

11. The pressure-sensitive adhesive composition of claim 1 wherein said composition comprises at least 58 % solids.

12. The pressure-sensitive adhesive composition of claim 1, wherein said composition has a room temperature viscosity of less than about 4 500 centipoise when formulated at 60 % solids content.

13. The pressure-sensitive adhesive product formed by applying a film of the pressure-sensitive adhesive composition of claim 1 onto a substrate and removing solvent from said film.

14. A process for the manufacture of novel pressure-sensitive adhesive compositions, said process comprising the steps of :
a) preparing an interpolymer formulation by charging to a reaction vessel a mixture of monomers including, in addition to at least one alkyl acrylate, from 0.01 to 5.00 % (by weight of polymerizable materials) of an internal cross-linking monomer and from 7 % to 20 % (by weight of polymerizable materials) of a chain growth inhibiting agent;
b) initiating a polymerization reaction ;
c) terminating said polymerization reaction at a time when said interpolymer formulation has a Williams plasticity number between 0.25 and 1.8.

15. The process of claim 14, wherein the mixture of monomers includes from 0.5 to 15 % (by weight of polymerizable material) of an acidic monomer.

16. The process of claim 14, wherein said chain growth inhibiting agent is selected from the group consisting of lower alkyl alcohols, aceto acetic ester, acetyl acetone and mixtures of the foregoing.

17. The process of claim 14, wherein said internal cross-linking monomer is an alkoxide of a central atom which is further substituted with a polymerizable methacrylyl function.

18. The process of claim 15 further comprising the step of adding to said formulation an external cross-linking agent that is not polymerized into the interpolymer but which is activated by solvent removal to cross-link two or more interpolymer chains through acid groups of said interpolymer chains, for obtaining a composition with a Williams plasticity number between about 1.7 and 4.0.

19. The method of claim 18, wherein said external cross-linking agent is selected from the group consisting of urea resins, melamine resins and metal aloxides which may have alkyl of other substituent on the metal atom in addition to the alkoxide substituent.

## Patentansprüche

1. Druckempfindliche Klebstoffzusammensetzung umfassend ein Mischpolymerisat in Lösung, wobei das Mischpolymerisat durch Polymerisation in Gegenwart von 7 bis 20 % Gewichtsanteil eines Kettentransfer-Agens, von mindestens zwei Monomeren, dessen eines ein Alkylacrylat und dessen anderes ein innen-vernetzendes Monomeres ist, gebildet wird, wobei das innen-vernetzende Monomer in einer Menge von 0,01 bis zu 5 % Gewichtsanteil des Mischpolymerisates vorliegt, und wobei die trockene Williams-Plastizitätszahl des Mischpolymerisates zwischen 0,25 und 1,8 liegt.

2. Druckempflindliche Klebstoffzusammensetzung gemäß Anspruch 1, worin das innen-vernetzende Monomer ein Alkoxid eines Zentralatoms ist, welches des weiteren mit einer polymersierbaren Methacrylyl-Funktion substituiert ist.

3. Druckempfindliche Klebstoffzusammensetzung gemäß Anspruch 2, worin das innen-vernetzende Monomer ein Alkoxysilan mit einer polymersierbaren Methacrylyl-Funktion ist.

4. Druckempfindliche Klebstoffzusammensetzung gemäß Anspruch 3, worin das innen-vernetzende Monomer aus der Gruppe umfassend Gamma-Methacryloxypropyltrimethoxysilan, Gamma-Methacryloxypropyl-Tris-(Beta-Methoxyethoxy)-Silan und Mischungen hiervon ausgewählt ist.

5. Druckempfindliche Klebstoffzusammensetzung gemäß Anspruch 1, worin das Kettentransfer-Agens aus der Gruppe umfassend die niedrigen Alkylalkohole, Azetessigester, Acetylaceton und Mischungen hiervon ausgewählt ist.

6. Druckempfindliche Klebstoffzusammensetzung gemäß Anspruch 1, worin das Mischpolymerisat des weiteren zwischen 0,5 und 15 % (Gewichtsanteil des Mischpolymerisates) von zumindest einem sauren Monomeren umfaßt.

7. Druckempfindliche Klebstoffzusammensetzung gemäß Anspruch 6, die des weiteren ein außen-vernetzendes Agens in einer Menge umfaßt, die ausreichend ist, um eine trockene Williams-Plastizitätszahl zwischen ungefähr 1,7 und ungefähr 4,0 zu ergeben.

8. Druckempfindliche Klebstoffzusammensetzung gemäß Anspruch 7, worin das außen-vernetzende Agens aus der Gruppe umfassend Harnstoffharze, Melaminharze und Metallalkoxide, die Alkyl oder andere Substituenten am Metallatom zusätzlich zu den Alkoxidsubstituenten aufweisen können, ausgewählt ist.

9. Druckempfindliche Klebstoffzusammensetzung gemäß Anspruch 7, worin das Mischpolymerisat zwischen ungefähr 0,1 % und ungefähr 1 % (Gewichtsanteil des Mischpolymerisates) des innenvernetzenden Monomeren aufweist.

10. Druckempfindliche Klebstoffzusammensetzung gemäß Anspruch 7, worin das Mischpolymerisat mindestens 3 % Gewichtsanteil (des Mischpolymerisates) von saurem Monomeren umfaßt.

11. Druckempfindliche Klebstoffzusammensetzung gemäß Anspruch 1, worin die Zusammensetzung mindestens 58 % Feststoffe umfaßt.

12. Druckempfindliche Klebstoffzusammensetzung gemäß Anspruch 1, worin die Zusammensetzung eine Zimmertemperaturviskosität von weniger als 4500 Centipoise (cp) aufweist, wenn sie bei einem 60 %igen Feststoffgehalt gebildet wurde.

13. Druckempfindliches Klebstofferzeugnis, gebildet durch Auftragen einer dünnen Schicht der druckempfindlichen Klebstoffzusammensetzung gemäß Anspruch 1 auf ein Substrat und Entfernen des Lösungsmittels aus diesem Film.

14. Verfahren zur Herstellung der neuartigen druckempfindlichen Klebstoffzusammensetzung, wobei das Verfahren die folgenden Schritte umfaßt:
a) Ansetzen einer Mischpolymerisatzubereitung durch Füllen einer Monomermischung, die zusätzlich zu mindestens einem Alkylacrylat zwischen 0,01 und 5 % (Gewichtsanteil des polymerisierbaren Materials) eines innen-vernetzenden Monomeren und zwischen 7 und 20 % (Gewichtsanteil des polymerisierbaren Materials) eines kettenwachstumshindernden Agens umfaßt, in ein Reaktionsgefäß;
b) Initiierung einer Polymerisationsreaktion;
c) Abbrechen der Polymerisierungsreaktion zu einem Zeitpunkt, zu dem die Mischpolymerisatzubereitung eine Williams-Plastizitätszahl zwischen 0,25 und 1,8 aufweist.

15. Verfahren gemäß Anspruch 14, worin die Monomermischung zwischen 0,5 und 15 % (Gewichtsanteil des polymerisierbaren Materials) von saurem Monomer aufweist.

16. Verfahren gemäß Anspruch 14, worin das kettenwachstumshindernde Agens aus der Gruppe umfassend niedrige Alkylalkohole, Azetessigestern, Acetylaceton und Mischungen der zuvor genannten Substanzen ausgewählt wird.

17. Verfahren gemäß Anspruch 14, worin das innen-vernetzende Monomere ein Alkoxid eines Zentralatomes ist, das des weiteren mit einer polymerisierbaren Methacrylyl-Funktion substituiiert ist.

18. Verfahren gemäß Anspruch 15, umfassend des weiteren den folgenden Schritt:
Hinzufügen eines außen-vernetzenden Agens zu dem Ansatz, welches nicht zu einem Mischpolymerisat polymerisiert wird, sondern welches durch den Lösungsmittelentzug zur Vernetzung von zwei oder mehreren Mischpolymerisatketten über die Säuregruppen der Mischpolymerisatketten veranlaßt wird, um eine Zusammensetzung mit einer Williams-Plastizitätszahl zwischen 1,7 und 4,0 zu erhalten.

19. Verfahren gemäß Anspruch 18, wobei das außen-vernetzende Agens aus der Gruppe umfassend Harnstoffharze, Melaminharze und Metallalkoxide, die Alkyl oder andere Sübstituenten am Metallatom zusätzlich zum Alkoxidsubstituenten aufweisen können, ausgewählt wird.

## Revendications

1. Composition d'adhésif sensible à la pression comprenant un interpolymère en solution, ledit interpolymère ayant été formé par polymérisation, en présence de 7 % à 20 % en poids d'un agent de transfert de chaîne, d'au moins deux monomères dont l'un est un alkylacrylate et dont un autre est un monomère de réticulation interne, ledit monomère de réticulation interne étant présent à raison de 0,01 à 5,00 % en poids par rapport à l'interpolymère ; composition dans laquelle le nombre de plasticité de Williams à sec dudit interpolymère est compris entre 0,25 et 1,8.

2. Composition d'adhésif sensible à la pression selon la revendication 1, dans laquelle ledit monomère de réticulation interne est un alkoxyde d'un atome central qui est en outre substitué par une fonction méthacrylyle polymérisable.

3. Composition d'adhésif sensible à la pression selon la revendication 2, dans laquelle ledit monomère de réticulation interne est un alkoxysilane comportant une fonction méthacrylyle polymérisable.

4. Composition d'adhésif sensible à la pression selon la revendication 3, dans laquelle ledit monomère de réticulation interne est choisi dans le groupe formé par le gamma-méthacryloxypropyltriméthoxysilane, le gamma méthacryloxy-propyltris-(béta-méthoxyéthoxy)silane, et les mélanges de ces composés.

5. Composition d'adhésif sensible à la pression selon la revendication 1, dans laquelle ledit agent de transfert de chaîne est choisi dans le groupe formé par les alcools alkyliques inférieurs, l'ester acétylacétique, l'acétylacétone et les mélanges de ces composés.

6. Composition d'adhésif sensible à la pression selon la revendication 1, dans laquelle ledit interpolymère comprend en outre 0,5 à 15 % (en poids de l'interpolymère) d'au moins un monomère acide.

7. Composition d'adhésif sensible à la pression selon la revendication 6, comprenant en outre un agent de réticulation externe en quantité suffisante pour lui impartir un nombre de plasticité de Williams à sec compris entre environ 1,7 et environ 4,0.

8. Composition d'adhésif sensible à la pression selon la revendication 7, dans laquelle ledit agent de réticulation externe est choisi dans le groupe formé par les résines d'urée, les résines de mélamine et les alkoxydes métalliques qui peuvent avoir un substituant alkyle ou autre sur l'atome métallique, en plus du substituant alkoxyde.

9. Composition d'adhésif sensible à la pression selon la revendication 7, dans laquelle ledit interpolymère comprend d'environ 0,1 % à environ 1,0 % (en poids de l'interpolymère) dudit monomère de réticulation interne.

10. Composition d'adhésif sensible à la pression selon la revendication 7, dans laquelle ledit interpolymère comprend au moins 3 % (en poids de l'interpolymère) d'un monomère acide.

11. Composition d'adhésif sensible à la pression selon la revendication 1, dans laquelle ladite composition renferme au moins 58 % de solides.

12. Composition d'adhésif sensible à la pression selon la revendication 1, dans laquelle ladite composition a une viscosité à température ambiante inférieure à environ 4 500 centipoises lorsqu'elle renferme 60 % de solides.

13. Produit adhésif sensible à la pression formé en appliquant un film de la composition d'adhésif sensible à la pression selon la revendication 1 sur un substrat et en éliminant le solvant dudit film.

14. Procédé de fabrication de compositions d'adhésifs sensibles à la pression, ledit procédé comprenant les étapes consistant à :
a) préparer une formulation d'interpolymère en chargeant dans un récipient réactionnel un mélange de monomères incluant, outre au moins un alkylacrylate, de 0,01 à 5,00 % (en poids de matières polymérisables) d'un monomère de réticulation interne et de 7 % à 20 % (en poids de matières polymérisables) d'un agent inhibiteur de croissance de chaîne;
b) amorcer une réaction de polymérisation ;
c) terminer ladite réaction de polymérisation au moment où ladite formulation d'interpolymère présente un nombre de plasticité de Williams compris entre 0,25 et 1,8.

15. Procédé selon la revendication 14, dans lequel le mélange de monomères renferme de 0,5 à 15 % (en poids de matières polymérisables) d'un monomère acide.

16. Procédé selon la revendication 14, dans lequel ledit agent inhibiteur de croissance de chaîne est choisi dans le groupe formé par les alcools alkyliques inférieurs, l'ester acétylacétique, l'acétylacétone et les mélanges de ces composés.

17. Procédé selon la revendication 14, dans lequel ledit monomère de réticulation interne est un alkoxyde d'un atome central qui est en outre substitué par une fonction méthacrylyle polymérisable.

18. Procédé selon la revendication 15, comprenant en outre l'étape qui consiste à ajouter à ladite formulation un agent de réticulation externe qui n'est pas polymérisé dans l'interpolymère mais qui est activé par l'élimination du solvant de manière à réticuler deux ou plusieurs chaînes de l'interpolymère à l'aide des groupes acides des chaînes dudit interpolymère, en vue d'obtenir une composition présentant un nombre de plasticité de Williams compris entre environ 1,7 et 4,0.

19. Procédé selon la revendication 18, dans lequel ledit agent de réticulation externe est choisi dans le groupe formé par les résines d'urée, les résines de mélamine et les alkoxydes métalliques qui peuvent avoir un substituant alkyle ou autre sur l'atome métallique en plus du substituant alkoxyde.
